# EUROPEAN PATENT APPLICATION

(11) **EP 4 848 609 A1**
(43) Date of publication of application: **02.12.2026**
(21) Application number: 25745307.6
(22) Date of filing: 22.01.2025
(51) Int. Cl.: H04B 7/06, H04W 24/10, H04W 72/21, H04W 24/08, H04B 17/345, H04B 17/318, H04W 72/232, H04W 8/24

(54) **METHOD AND DEVICE FOR REPORTING CHANNEL STATE INFORMATION REPORTING IN WIRELESS COMMUNICATION SYSTEM**

(30) Priority: 22.01.2024 US 202463623774 P; 18.12.2024 KR 20240189742
(71) Applicant: LG Electronics Inc., Yeongdeungpo-gu Seoul 07336 (KR)
(72) Inventor: KIM, Hyungtae, Seoul 06772 (KR); KANG, Jiwon, Seoul 06772 (KR)
(74) Representative: Plasseraud IP
(86) International application number: PCT/KR2025/001194
(87) International publication number: WO 2025/159481

(57) **Abstract**

A method and a device for performing channel state information reporting in a wireless communication system are disclosed. The method according to one embodiment of the present disclosure may comprise steps in which a terminal: receives a configuration for channel state information (CSI) reporting; reports first information about whether an event related to the CSI reporting is detected; receives, on the basis of the event being detected, downlink control information for triggering the CSI reporting; and reports second information about report quantity related to the CSI reporting in an uplink resource scheduled through the downlink control information.

## Description

### [TECHNICAL FIELD]

The present disclosure relates to a wireless communication system, and more particularly, to a method and device for performing channel state information (CSI) reporting in a wireless communication system.

### [BACKGROUND ART]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical object of the present disclosure is to provide a method and device for performing channel state information (CSI) reporting in a wireless communication system.

The technical object of the present disclosure is to provide a method and an apparatus for configuring/applying a processing time for a beam report initiated by a UE during a corresponding report.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include receiving, by a UE, a configuration for a channel state information (CSI) report; reporting, by the UE, the first information for whether an event related to the CSI report is detected; based on the event being detected, receiving, by the UE, downlink control information triggering the CSI report; and reporting, by the UE, the second information for the report quantity related to the CSI report in an uplink resource scheduled through the downlink control information. Here, the report quantity is related to a power measurement value for a reference signal configured as a measurement resource based on the configuration, and at least one value related to a processing time of the CSI report may be set based on whether computation for the report quantity is completed upon detection of the event.

A method according to an additional aspect of the present disclosure may include transmitting, by a base station, a configuration for a channel state information (CSI) report; receiving, by the base station, the first information for whether an event related to the CSI report is detected; based on the event being detected, transmitting, by the base station, downlink control information triggering the CSI report; and receiving, by the base station, the second information for the report quantity related to the CSI report in an uplink resource scheduled through the downlink control information. Here, the report quantity is related to a power measurement value for a reference signal configured as a measurement resource based on the configuration, and at least one value related to a processing time of the CSI report may be set based on whether computation for the report quantity is completed upon detection of the event.

### [Technical Effects]

According to various embodiments of the present disclosure, a method and device for performing channel state information (CSI) reporting in a wireless communication system may be provided.

According to various embodiments of the present disclosure, a method and an apparatus for configuring/applying a processing time for a beam report initiated by a UE during a corresponding report may be provided.

According to various embodiments of the present disclosure, a processing time related to a beam report initiated by a UE may be optimized, and there is the technical effect of reducing an unnecessary report delay based thereon.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a general functional architecture related to Functionality-based LCM and Model-based LCM.
FIG. 8 illustrates signaling operations for procedures related to AI/ML.
FIG. 9 illustrates a two-step-based UE-initiated beam report to which the embodiment of the present disclosure may be applied.
FIG. 10 is a diagram for describing the operation of a UE according to an embodiment of the present disclosure.
FIG. 11 is a diagram for describing the operation of a base station according to an embodiment of the present disclosure.
FIG. 12 is a diagram which illustrates a block diagram of a wireless communication device according to an embodiment of the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The technology described in the present specification may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented by a wireless technology such as universal terrestrial radio access (UTRA) or CDMA2000. TDMA may be implemented by a wireless technology such as global system for mobile communications (GSM)/ general packet radio service (GPRS)/ enhanced data rates for GSM evolution (EDGE). OFDMA may be implemented by a wireless technology such as institute of electrical and electronics engineers (IEEE) 802.11 (Wi-Fi), IEEE 802.16 (WiMAX), IEEE 802-20, evolved UTRA (E-UTRA), long term evolution (LTE), and 5G NR.

The technology described in the present specification may be implemented by 6G wireless technology, and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

To clarify description, it is described based on a 3GPP communication system (e.g., LTE-A, NR, 6G), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR/6G may be referred to as a 3GPP system. "xxx" means a detailed number for a standard document. LTE/NR/6G may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

The aforementioned NR system is a new clean-slate type mobile communication system as a successor technology of long term evolution (LTE), having characteristics such as high performance, low latency, and high availability. In the case of the NR system, all available spectrum resources can be utilized, such as a low frequency band below 1 GHz, a mid-frequency band of 1 GHz to 10 GHz, and a high frequency (millimeter wave) band of 24 GHz or higher. Based on the fundamental technology of the NR system, a 6G mobile communication system (hereinafter, 6G system) is being developed.

The 6G system is aimed at (i) a very high data rate per device, (ii) a very large number of connected devices, (iii) global connectivity, (iv) very low latency, (v) reduction of energy consumption of battery-free internet of things (IoT) devices, (vi) ultra-reliable connectivity, and (vii) connected intelligence having machine learning capability. The vision of the 6G system may be four aspects such as intelligent connectivity, deep connectivity, holographic connectivity, and ubiquitous connectivity.

The NR system and a new RAT system (hereinafter, next-generation RAT system) including the 6G system uses an OFDM transmission scheme or a transmission scheme similar thereto. The next-generation RAT system may follow OFDM parameters different from OFDM parameters of LTE. Alternatively, the next-generation RAT system may follow the numerology of the existing LTE/LTE-A as it is, but may support a larger system bandwidth (e.g., 100 MHz). Alternatively, one cell may support a plurality of numerologies. That is, terminals operating with different numerologies may coexist in one cell.

A numerology corresponds to one subcarrier spacing in a frequency domain. As a reference subcarrier spacing is scaled by an integer N, a different numerology may be defined.

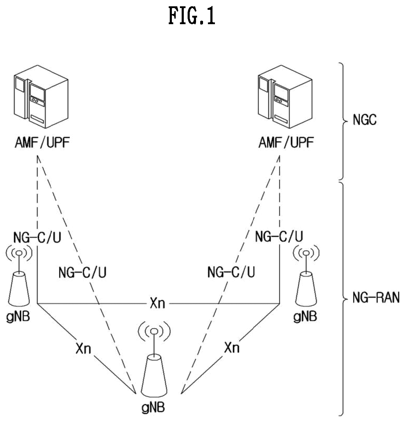

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

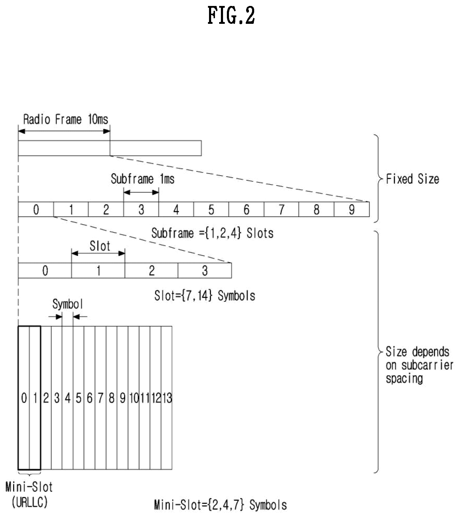

FIG. 2 illustrates a frame structure in a wireless communication system to which the present disclosure may be applied.

A next-generation RAT system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a next-generation RAT system.

Hereinafter, an OFDM numerology and frame structure which may be considered in a next-generation RAT system will be described. A plurality of OFDM numerologies supported in a next-generation RAT system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

A next-generation RAT system supports a plurality of numerologies (or subcarrier spacings (SCS)) for supporting a variety of 5G/6G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. Although not described in Table 1, 6G systems may additionally support 480kHz/960kHz SCS.

The frequency bands of next-generation RAT systems are defined by various types of frequency ranges (e.g., FR1, FR2, etc.). For example, FR1 and FR2 may be configured as shown in Table 2 below. Additionally, FR2 may refer to millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in a next-generation RAT system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink.

In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈ {0,..., Nₛₗₒₜ^{subframe,µ}-1 } in a subframe and are numbered in an increasing order of n_{s,f}^{µ}∈ {0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜf^{rame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| w | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a next-generation RAT system, an antenna port, a resource grid, a resource element, a resource block, a carrier part, etc. may be considered. Hereinafter, the physical resources which may be considered in a next-generation RAT system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

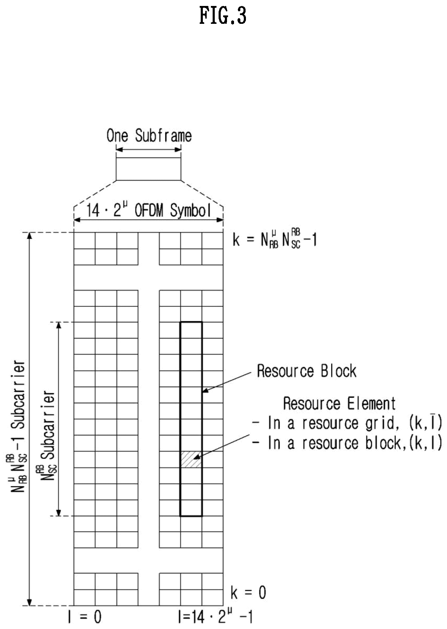

FIG. 3 illustrates a resource grid in a wireless communication system to which the present disclosure may be applied.

In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In a next-generation RAT system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l'). Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.
offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
absoluteFrequencyPointA represents a frequency-position of point A expressed as in ARFCN (absolute radiofrequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

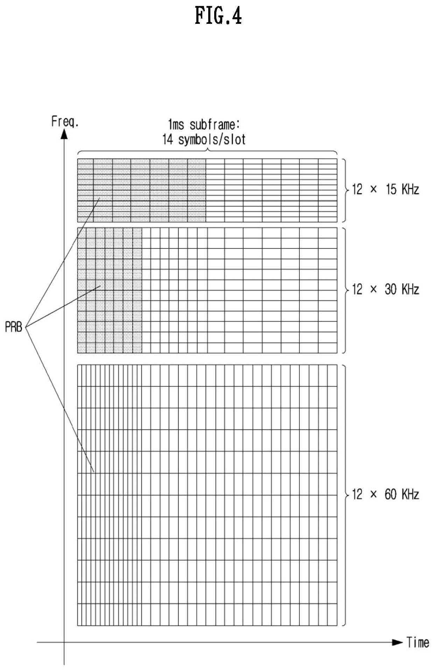

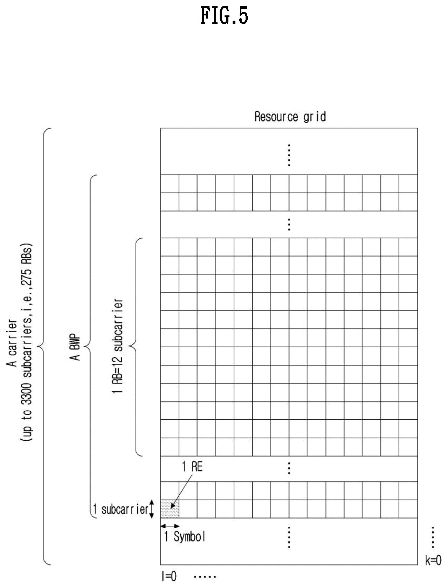

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In a next-generation RAT system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

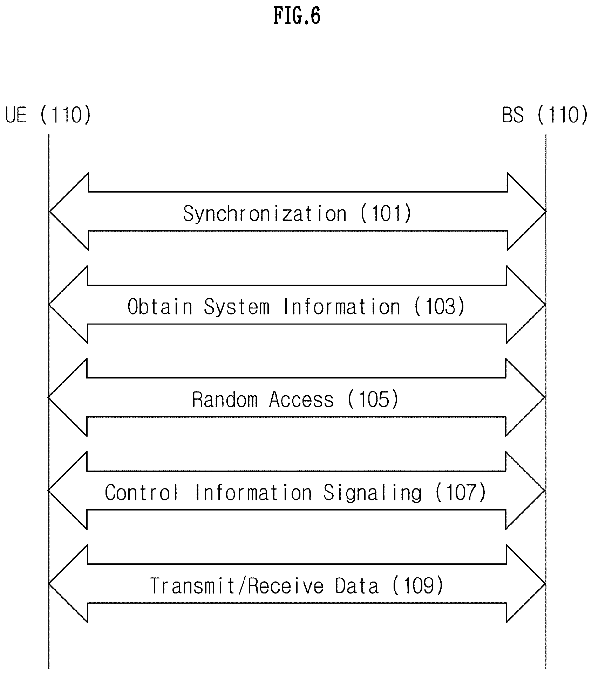

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

The second node of FIG. 6 supports dynamic spectrum sharing (DSS), and may provide connection not only to nodes in which 6G technology is implemented but also to nodes in which pre-6G wireless communication (e.g., 5G, 4G) technology is implemented. That is, the first node of FIG. 6 may have 6G technology implemented or pre-6G wireless communication (e.g., 5G, 4G) technology implemented. In addition, the first node and/or the second node may support not only a non-overlapping full duplex mode but also a full duplex mode.

In FIG. 6, for the sake of simplification of explanation, the first node and the second node are assumed to be a user equipment (UE) and a base station, respectively, and an operation in which a UE (110) and a base station (120) transmit and/or receive data, and operations performed prior thereto, are illustrated. However, the operation of FIG. 6 is not limited to an operation between a UE and a base station, and may be interpreted as an operation between the first node and the second node. In addition, in FIG. 6, a direct transmission/reception operation of wireless signals between the UE (110) and the base station (120) is illustrated, but one or more intermediate points may exist between the UE (110) and the base station (120), and a wireless signal may be transmitted and received via the one or more intermediate points.

Referring to FIG. 6, in step 101, the UE (110) and the base station (120) perform synchronization. For example, the UE (110) performs an initial cell search operation. Specifically, the UE (110) may detect at least one synchronization signal for base station connection, which is transmitted from the base station (120) according to a predefined rule. Here, the synchronization signal may include a plurality of synchronization signals classified according to structure or use (e.g., a first synchronization signal (e.g., a primary synchronization signal), a second synchronization signal (e.g., a secondary synchronization signal), etc.). Through this, the UE (110) may identify a boundary of a unit (e.g., a frame, a subframe, a slot, and/or a symbol) constituting radio signal transmission of the base station (120), and may acquire information (e.g., a cell identifier) on the base station (120).

In step 103, the UE (110) acquires system information transmitted from the base station (120). The system information is information related to attributes, characteristics, and/or capabilities of the base station (120) necessary for accessing the base station (120) and using services, and may be classified according to contents (e.g., whether it is essentially required for access), transmission structure (e.g., channel used, whether it is provided on-demand), etc. For example, the system information may be classified into first system information (e.g., a master information block (MIB), primary system information), second system information (e.g., a system information block (SIB), secondary system information), etc. If necessary, the UE (110) may transmit a signal requesting system information before receiving the system information. However, the requesting and providing of the system information may be performed after a random access procedure described later.

In step 105, the UE (110) and the base station (120) perform a random access procedure. The UE (110) may transmit and/or receive at least one message (e.g., a random access preamble, a random access response (RAR) message, etc.) for the random access procedure, based on information related to a channel for the random access procedure of the base station (120), which is acquired through the system information (e.g., channel location, channel structure, structure of supported preambles, etc.). For example, the UE (110) may transmit a first message (e.g., preamble, MSG1) through a channel for the random access procedure, receive a second message (e.g., RAR message, MSG2), transmit a third message (e.g., MSG3) including information (e.g., identification information) related to the UE (110) to the base station (120) using scheduling information included in the second message, and receive a fourth message (e.g., MSG4) for contention resolution and/or connection establishment. In another example, the first message and the third message may be transmitted and received as one message, or the second message and the fourth message may be transmitted and received as one message.

In step 107, the UE (110) and the base station (120) perform signaling of control information. Here, the control information may be defined in various layers, such as a layer controlling connection (e.g., a radio resource control (RRC) layer), a layer processing mapping between logical channels and transport channels (e.g., a media access control (MAC) layer), and a layer processing physical channels (e.g., a physical (PHY) layer). For example, the UE (110) and the base station (120) may perform at least one of signaling for establishing connection, signaling for determining configuration related to communication, and signaling for indicating allocated resources.

In step 109, the UE (110) and the base station (120) transmit and/or receive data. In other words, the UE (110) and the base station (120) process data and may transmit and/or receive the data based on the signaling of the control information. For example, when transmitting data, the UE (110) or the base station (120) may perform at least one of channel encoding, rate matching, scrambling, constellation mapping, layer mapping, waveform modulation, antenna mapping, and resource mapping for information bits. Conversely, when receiving data, the UE (110) or the base station (120) may perform at least one of signal extraction from resources, waveform demodulation per antenna, signal placement considering layer mapping, constellation demapping, descrambling, and channel decoding.

Table 5 represents an example of a DCI format in a next-generation RAT system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A UE may be configured at list of up to M TCI-State configurations in a higher layer parameter PDSCH-Config to decode a PDSCH according to a detected PDCCH having intended DCI for a corresponding UE and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

### CSI-related Operation

In a new radio (NR) system, a channel state information-reference signal (CSI-RS) is used for time/frequency tracking, CSI computation, layer 1(L1)-reference signal received power(RSRP) computation and mobility. Here, CSI computation is related to CSI acquisition, and L1-RSRP computation is related to beam management (BM).

Channel state information (CSI) collectively refers to information that may represent the quality of a wireless channel (or, also referred to as a link) formed between a UE and an antenna port.
- In order to perform one of the usages of a CSI-RS as described above, a terminal (e.g., a user equipment, UE) receives configuration information related to CSI from a base station (e.g., general Node B, gNB) through radio resource control (RRC) signaling.

The configuration information related to CSI may include at least one of information related to a CSI-interference management(IM) resource, information related to a CSI measurement configuration, information related to a CSI resource configuration, information related to a CSI-RS resource or information related to a CSI report configuration.
i) Information related to a CSI-IM resource may include CSI-IM resource information, CSI-IM resource set information, etc. A CSI-IM resource set is identified by a CSI-IM resource set identifier (ID), and one resource set includes at least one CSI-IM resource. Each CSI-IM resource is identified by a CSI-IM resource ID.
ii) Information related to a CSI resource configuration may be expressed as a CSI-ResourceConfig IE. Information related to a CSI resource configuration defines a group that includes at least one of a non zero power (NZP) CSI-RS resource set, a CSI-IM resource set or a CSI-SSB resource set. In other words, the information related to a CSI resource configuration includes a CSI-RS resource set list, and the CSI-RS resource set list may include at least one of an NZP CSI-RS resource set list, a CSI-IM resource set list or a CSI-SSB resource set list. A CSI-RS resource set is identified by a CSI-RS resource set ID, and one resource set includes at least one CSI-RS resource. Each CSI-RS resource is identified by a CSI-RS resource ID.

Parameters representing the usage of a CSI-RS (e.g., a BM-related 'repetition' parameter, a tracking-related 'trs-Info' parameter) may be configured for each NZP CSI-RS resource set.

In addition, a measurement resource may be configured for a CSI report. For example, a corresponding measurement resource may be configured through a CSI report configuration. Here, a measurement resource may include a resource for channel measurement (e.g., a channel measurement resource (CMR)) and a resource for interference measurement (e.g., an interference measurement resource (IMR)). An RS resource configured as a measurement resource (e.g., a CSI-RS resource, an SSB resource, etc.) may be located at measurement occasion(s) based on a configuration for a CSI report.

iii) Information related to a CSI report configuration includes a report configuration type (reportConfigType) parameter representing a time domain behavior and a report quantity (reportQuantity) parameter representing the CSI-related quantity for a report. The time domain behavior may be periodic, aperiodic or semi-persistent.
- A UE measures CSI based on configuration information related to the CSI.

The CSI measurement may include (1) a process in which a UE receives a CSI-RS and (2) a process in which CSI is computed through a received CSI-RS, and a detailed description thereof will be provided later.

In a CSI-RS, the resource element (RE) mapping of a CSI-RS resource is configured in time and frequency domains by a higher layer parameter CSI-RS-ResourceMapping.
- A UE reports the measured CSI to a base station.

Here, when the quantity of CSI-ReportConfig is configured as 'none (or No report)', the UE may omit the report. However, even when the quantity is configured as 'none (or No report)', the UE may perform a report to a base station. A case in which the quantity is configured as 'none' is a case in which an aperiodic TRS is triggered or when a repetition is configured. Here, the report of the UE may be omitted only when a repetition is configured as 'ON'.

Artificial intelligence (AI) / machine learning (ML) related operations

AI/ML may be introduced/applied to the next-generation RAT system described in the present disclosure.

When AI is introduced into communication, real-time data transmission can be simplified and enhanced. AI can determine how complex target tasks are performed by using numerous analyses. That is, AI can increase efficiency and reduce processing delay. Time-consuming tasks such as handover, network selection, and resource scheduling can be performed instantly by using AI. AI can also play an important role in M2M, machine-to-human, and human-to-machine communication. In addition, AI can enable rapid communication in Brain Computer Interface (BCI). An AI-based communication system can be supported by meta-materials, intelligent structures, intelligent networks, intelligent devices, intelligent cognitive radios, self-sustaining wireless networks, and machine learning.

Hereinafter, a functional framework for AI/ML operation will be described.

Hereinafter, for a more specific description of AI (or AI/ML), terms may be defined as follows.
- Data collection: data collected from a network node, a management entity, or a terminal, etc. as a basis for AI model training, data analysis, and inference.
- AI model: a data-driven algorithm applying AI technology, which generates a set of outputs including prediction information and/or decision parameters, based on a set of inputs.
- AI/ML training: an online or offline process of training an AI model by learning functions and patterns that best represent data and are trained for inference, in order to obtain an AI/ML model.
- AI/ML inference: a process of predicting or inducing decisions based on the collected data and the AI model by using the trained AI model.

The Life Cycle Management (LCM) procedure for an AI/ML model (i.e., model training, model deployment, model inference, model monitoring, model updating, etc.) can be classified into functionality-based LCM and model-based LCM. In the functionality-based LCM, the AI/ML model may not be identifiable in the network, and the network may instruct activation/deactivation/fallback/switching of the AI/ML functionality. In the model-ID (identifier)-based LCM, the AI/ML model can be identifiable in the network, and the network/terminal may activate/deactivate/select/switch the AI/ML model through the model ID.

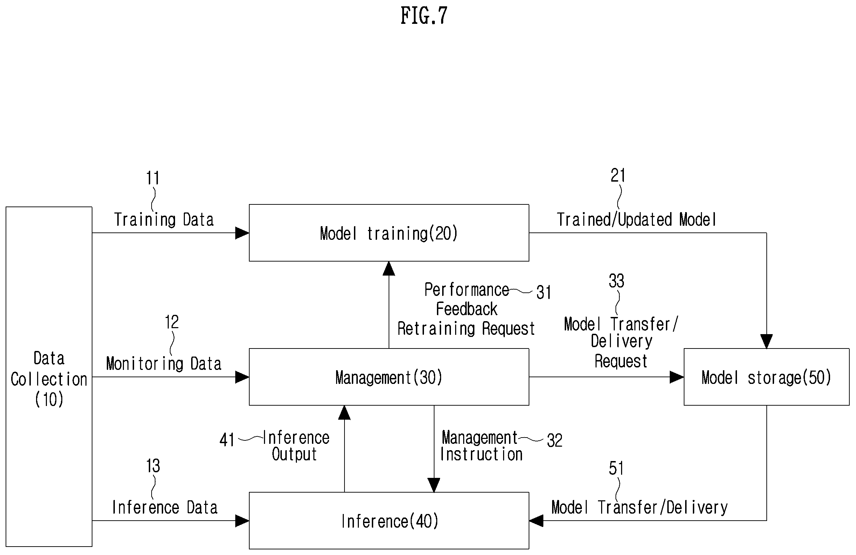

FIG. 7 illustrates a general functional architecture related to both the functionality-based LCM and the model-based LCM. Some functions or some data/information/command flows (i.e., arrows) illustrated in FIG. 7 may be omitted.

Referring to FIG. 7, a general functional framework may be configured to include a Data Collection function (10), a Model Training function (20), a Management function (30), an Inference function (40), and a Model Storage function (50).

The Data Collection function (10) is a function of providing input data to the Model Training function (20), the Management function (30), and the Inference function (40). The Data Collection function (10) may perform data preparation based on raw data, and may provide input data processed through the data preparation. Examples of raw data may include received data/measurement data from terminals or other network entities, inference/output of an AI/ML model, and the like. The Data Collection function (10) may be performed by a single entity (e.g., a terminal, a network node, etc.), but may also be performed by a plurality of entities.

Here, Training Data (11) refers to data necessary as input for the AI/ML Model Training function (20). Monitoring Data (12) refers to data necessary as input for the Management (30) of the AI/ML model or the AI/ML functionality. Inference Data (13) refers to data necessary as input for the AI/ML Inference function (40).

The Model Training function (20) is a function of performing AI/ML model training, validation, and testing capable of generating model performance metrics that can be used as part of an AI/ML model test procedure. The Model Training function (20) may perform data preparation (e.g., data pre-processing and cleaning, forming and transformation) based on the Training Data (11) delivered from the Data Collection function (10), if necessary.

A trained/updated model (21): when a Model Storage function (50) is present, the trained, validated, and tested AI/ML model is delivered to the Model Storage function (50), or an updated version of the model is delivered to the Model Storage function (50).

The Management function (30) is a function of supervising the operation of the AI/ML model or the AI/ML functionality. In addition, the Management function (30) may perform a decision to guarantee proper inference operation based on data received from the Data Collection function (10) (i.e., Monitoring Data (12)) and/or data received from the Inference function (40) (i.e., Inference Output (41)).

A Management Instruction (32) is information necessary as input for managing the Inference function (40). The related information may include selection/(de)activation/switching of an AI/ML model or an AI/ML-based functionality, and may further include fallback to non-AI/ML operation (i.e., not relying on an inference process).

A Model Transfer/Delivery Request (33) may be used for requesting model(s) from the Model Storage (50).

Performance Feedback/Retraining Request (31) refers to information necessary as input for the Model Training function (20) (e.g., for the purpose of model (re)training or updating).

The Inference function (40) is a function of providing output from a process of applying an AI/ML model or AI/ML functionality using data (i.e., Inference Data (13)) provided by the Data Collection (10) as input. The Inference function (40) may perform data preparation (e.g., data pre-processing and cleaning, forming and transformation) based on the Inference Data (13) delivered by the Data Collection (10), if necessary.

Inference Output (41) is data used in the Management function (30) for monitoring performance of the AI/ML model or the AI/ML functionality. The Inference Output (41) may include inference output of the AI/ML model generated by the Inference function (40), and the details of the inference output may vary depending on a use case.

The Model Storage function (50) is a function of storing trained/updated models that can be used to perform the Inference function (40). The Model Storage function (50) illustrated in FIG. 7 may be used as a reference point, if applicable, in protocol termination, model transfer/delivery, and related processes. In addition, the Model Storage function (50) is merely one example, and is not intended to limit the actual storage location of the AI/ML model, and may also be omitted.

Model Transfer/Delivery (51) is used for delivering an AI/ML model to the inference function.

Depending on whether or not the AI/ML function is capable among a plurality of nodes, cooperation levels can be defined as follows, and variations due to a combination of a plurality of levels or separation of any one level are also possible.

Cat 0a) No collaboration framework: An AI/ML algorithm is purely implementation-based, and no wireless interface modification is required.

Cat 0b) This level corresponds to a framework with no collaboration, which involves a modified wireless interface adapted to an efficiently implementation-based AI/ML algorithm.

Cat 1) Node-to-node support is involved to improve the AI/ML algorithm of each node. For example, this applies when a certain node receives support from another node (for training, adaptation, etc.), and vice versa. At this level, model exchange between network nodes is not required.

Cat 2) Joint AI/ML operation among a plurality of nodes can be performed. This level requires AI/ML model command or exchange between network nodes.

FIG. 7 corresponds to a drawing illustrating an overall functional framework for an AI/ML model, and not all functions and/or all data/information/command signals illustrated in FIG. 7 are necessarily performed within a specific node, but only some may be performed.

The AI/ML model can be classified into a One-side model and a Two-side model, depending on whether training and/or inference is performed in a single node or jointly/sequentially performed in a plurality of nodes.

A One-side model may mean an AI/ML model in which inference is entirely performed by a single node (e.g., a UE or a network). Here, training of the AI/ML model may also be entirely performed by one node. Training and inference of the AI/ML model may be performed by the same node, or the training and inference of the AI/ML model may be performed by different nodes, respectively.

A Two-side model may mean an AI/ML model in which joint inference is performed by a plurality of nodes (e.g., a UE and a network). Joint inference means that inference is jointly performed across a plurality of nodes. For example, a first part of inference may be performed by a first node, and a remaining part of inference may be performed by a second node. The Two-side model can be classified into several types according to the training method of the AI/ML model.
- First type: An AI/ML model may be trained in one node. In this case, joint training may be performed. Thereafter, the trained model may be distributed to other nodes/entities.
- Second type: Joint training of an AI/ML model may be performed respectively in a plurality of nodes/entities (e.g., a network and a UE). Joint training may mean that model generation (e.g., a CSI generation part) and model reconstruction (compression of CSI per sub-use case) are trained in the same loop for forward activation and backward gradient. In this type, joint training may include both simultaneous training (i.e., model generation training and model reconstruction training are simultaneously performed) and sequential training (i.e., model reconstruction training is performed after model generation training).
- Third type: Separate training of an AI/ML model may be performed respectively in a plurality of nodes (e.g., a network and a UE). Separate training may mean that training sequentially starts in one node and continues in another node. In this case, a first node first performs the AI/ML model, and when training data is shared to a second node, the second node may perform the AI/ML model using the shared training data. For example, training for a CSI generation part may be performed by a UE, and CSI reconstruction may be performed by the network.

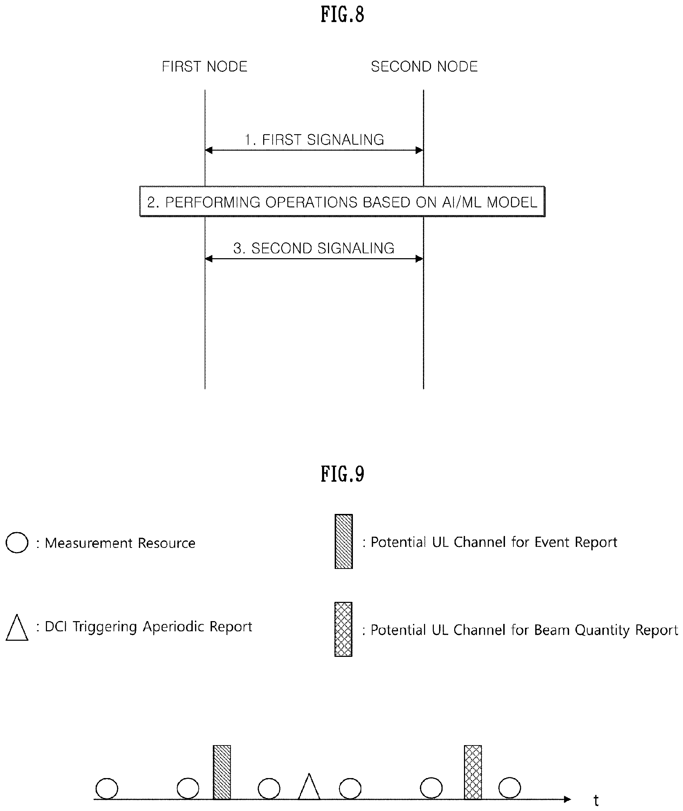

The operation described in the present disclosure below, even without a separate mention (i.e., without an explicit mention of being by/based on/for an AI/ML model), may be described/interpreted as an operation based on an AI/ML model as illustrated in FIG. 8.

In addition, unless particularly limited in the description of the present disclosure, the AI/ML model may correspond to a One-side model in which inference is entirely performed by a single node, or a Two-side model in which joint inference is performed by a plurality of nodes.

Step 1: In the following description of the present disclosure, signaling (e.g., information/data/channel/signal, etc.) or a set of signaling between a specific node (e.g., a UE, a network, etc.) and another node, even without a separate mention, may be interpreted as Step 1 signaling or a set of signaling used to perform an operation based on an AI/ML model. For example, it may correspond to training data for training (i.e., generation and/or reconstruction) of the AI/ML model of FIG. 7, inference data for inference of the AI/ML model, or feedback for the AI/ML model. If signaling between nodes is not required prior to the operation based on the AI/ML model in the present disclosure, Step 1 may be omitted. In the case where a One-side model is used in the present disclosure, the unidirectional/bidirectional signaling (set) in the present disclosure may correspond to Step 1 signaling. In addition, in the case where a Two-side model is used in the present disclosure, the unidirectional/bidirectional signaling in the present disclosure may correspond to Step 1 signaling, and repetitive signaling operations may also correspond to Step 1 signaling.

For example, in AI/ML model-based beam management (BM), if a base station predicts (i.e., infers) one or more beams of good quality based on an AI/ML model, the base station may receive quality/strength information for a plurality of beams from a UE. Also, if a UE predicts (i.e., infers) one or more beams of good quality based on an AI/ML model, the UE may receive a plurality of beams from the base station.

Step 2: In the following description of the present disclosure, an operation (e.g., calculation, selection, prediction, etc.) in a specific node (e.g., a UE, a network, etc.) or a joint operation (e.g., calculation, selection, prediction, etc.) in a plurality of nodes (e.g., a UE, a network, etc.), even without a separate mention, may correspond to Step 2 operation based on one or more functions in a functional framework of the AI/ML model. For example, it may correspond to training (i.e., generation and/or reconstruction) of the AI/ML model of FIG. 7, or inference of the AI/ML model. In the case where a One-side model is used, the operation performed by a single node in the present disclosure may correspond to Step 2 operation, and in the case where a Two-side model is used, the joint operation performed by a plurality of nodes in the present disclosure may correspond to Step 2 operation.

For example, in AI/ML model-based BM, a base station may predict (i.e., infer) one or more beams of good quality based on an AI/ML model by using quality/strength information for a plurality of beams received from a UE as inference data. Also, a terminal may measure a plurality of beams received from a base station and predict (i.e., infer) one or more beams of good quality based on an AI/ML model by using the measurement results as inference data.

Step 3: In the following description of the present disclosure, signaling (e.g., information/data/channel/signal, etc.) or a set of signaling between a specific node (e.g., a UE, a network, etc.) and another node, even without a separate mention, may be interpreted as Step 3 signaling or a set of signaling generated as a result of an operation based on an AI/ML model. For example, it may correspond to an output resulting from inference of the AI/ML model of FIG. 7. If signaling between nodes is not required as a result of an operation based on the AI/ML model in the present disclosure, Step 3 may be omitted. In the case where a One-side model is used, the unidirectional/bidirectional signaling (set) in the present disclosure may correspond to Step 3 signaling. In addition, in the case where a Two-side model is used, the unidirectional/bidirectional signaling in the present disclosure may correspond to Step 3 signaling, and repetitive signaling operations may also correspond to Step 3 signaling.

For example, in AI/ML model-based BM, a base station may transmit to a terminal one or more beams predicted based on an AI/ML model as candidates so that the UE may determine an optimal beam. Also, a UE may report to a base station one or more beams predicted based on an AI/ML model as candidates in order to request candidate beam transmission from the base station for determining an optimal beam.

### Processing Time in Beam Report Initiated by UE

In a wireless communication system, a beam report in which a UE reports the value of RSRP (e.g., L1-RSRP) and/or SINR (e.g., L1-SINR) to a base station based on a measurement value (e.g., measured power) for a DL reference signal (e.g., an SSB, a CSI-RS, etc.) may be supported in a form of CSI report/feedback. In other words, a corresponding beam report may be performed by utilizing a framework for CSI measurement and report configuration. In this regard, a base station pre-configures and provides to a UE a UL resource and configuration for a beam report, and a UE may report information for a beam to a base station based on a corresponding configuration.

In a wireless communication system, the uplink control information of Layer 1 (e.g., a physical layer) has the advantage of having a smaller transmission delay time compared to the control information of a higher layer. As an example, in order for a UE to transmit information to a base station through an MAC-CE or an RRC message, a UE's scheduling request (SR) procedure and a base station's PUSCH allocation procedure (based on a corresponding SR) may be required, which may result in a delay time and overhead. In addition, generally, as information belongs to a higher layer, the time required to decode information (e.g., a decoding time, a processing time) may be longer. In addition, in order to transmit the UL control information of Layer 1, a UL physical channel resource (e.g., a PUCCH, a PUSCH) needs to be (pre-)configured/allocated to a corresponding UE. In other words, as the number of UEs increases in terms of a network (NW) (or a base station), the amount of UL resources that shall be allocated to each UE increases, so the overhead of overall UL resource utilization may increase.

Accordingly, in a wireless communication system, information that shall be transmitted relatively urgently for the operation of a physical layer, etc. (e.g., an SR (for PUSCH allocation), HARQ-ACK (for retransmission), CSI (for scheduling, MCS and precoder determination) and beam information (for digital/analog beam determination)) is transmitted as physical layer uplink control information (UCI). Excluding an SR from information in this example, a network (or a base station) determines/controls a UE's information report timing.

However, a report initiated/triggered by a network has a limitation that a UE shall be configured/indicated to transmit UCI frequently in an environment where a wireless channel is likely/highly likely to change rapidly. In other words, in such an environment, a problem may arise where UL resource overhead and related DL measurement RS overhead for a UCI report increase, and a UE's power consumption also increases due to a UE's frequent UL transmission. In addition, since a UL resource shall be allocated to each UE as the number of UEs within a cell/TRP coverage increases, the overhead for a UL resource increases.

To overcome the limitation of a report initiated/triggered by a network as described above, a report method initiated/triggered by a UE and/or an event-based/triggered report method may be considered. For a report method initiated/triggered by a UE and/or an event-based/triggered report method, whether and/or when to report may be determined by a UE. In other words, a UE may be configured to perform a corresponding report (e.g., a UCI report) only when necessary (e.g., when a specific event occurs), thereby reducing UL resource overhead and UE power consumption. In addition, since information is reported based on a lower layer (e.g., Layer 1), there is also the technical effect of performing a report rapidly to a network.

Regarding a report method initiated/triggered by a UE, a method may be considered in which a specific event for a beam report is defined and a UE determines whether an event occurs and performs a beam report only when a corresponding event occurs. For clarity of description, the present disclosure refers to a corresponding beam report method as a UE-initiated beam report.

The present disclosure proposes various methods for applying/configuring a processing time (e.g., CSI processing times Z and Z') for a UE-initiated beam report during a corresponding report.

First, CSI processing times Z and Z' for an existing CSI report (e.g., a CSI/beam report initiated by a network) may be defined and used as shown in Table 6. In addition, Table 7 and Table 8 illustrate CSI computation delay requirements in relation to CSI processing times Z and Z'.

Here, a Z value and a Z' value may be a value applied only to an aperiodic (AP) CSI report. Specifically, a Z value defines the minimum time required for a UE to perform CSI processing from a timing when the reception of UL scheduling DCI triggering an aperiodic CSI report is completed until a timing when the transmission of a corresponding aperiodic CSI report starts. In addition, a Z' value defines the minimum time required for a UE to perform CSI processing from the last timing of aperiodic measurement (e.g., aperiodic CMR/IMR measurement) until the timing of starting the transmission of an aperiodic CSI report.

**[Table 6]**

| |
|---|
| UE's CSI Computation Time |
| When the CSI request field of DCI triggers a CSI report in a PUSCH, a UE shall provide a valid CSI report for the nth trigger report. |
| - When the first UL symbol delivering a corresponding CSI report by including the effect of the timing advance does not start previously in symbol Z_{ref}, |
| - When the first uplink symbol delivering the nth CSI report by including the effect of the timing advance does not start previously in symbol Z'_{ref}(n), |
| Here, Z_{ref} is defined as the next UL symbol where a CP starts after the end of the last symbol of a PDCCH triggering a CSI report, and Z'_{ref}(n) is defined as the next UL symbol where a CP starts after the latest time among an aperiodic CSI-RS resource for channel measurement, an aperiodic CSI-IM used for interference measurement and an aperiodic NZP CSI-RS for interference measurement for CSI-ReportConfig or multiple sub-configurations are included in all triggered CSI-ReportConfigs, an aperiodic CSI-RS is used for channel measurement for the nth triggered CSI report, and T_{switch} is applied only when Z_1 of Table 7 is applied. |
| When a PUSCH indicated by DCI overlaps with another PUCCH or PUSCH, a CSI report is multiplexed, and otherwise, a CSI report is transmitted in a PUSCH specified by DCI. |
| When the CSI request field of DCI triggers a CSI report in a PUSCH, if the first UL symbol delivering a corresponding CSI report by including the effect of the timing advance starts earlier than symbol Z_{ref}, |
| - A UE may ignore scheduling DCI when HARQ-ACK or a transmission block is not multiplexed in a PUSCH. |
| When the CSI request field of DCI triggers a CSI report in a PUSCH, if the first UL symbol delivering the nth CSI report by including the effect of the timing advance starts earlier than symbol Z'_{ref}(n), |
| - A UE may ignore scheduling DCI when the number of triggered reports is 1 and HARQ-ACK or a transmission block is not multiplexed in a PUSCH. |
| - Otherwise, a UE does not need to update CSI for the nth triggered CSI report. When two PDCCH candidates from each of the two search space sets are included in PDCCH reception for the purpose of determining the last symbol of a PDCCH triggering a CSI report, a PDCCH candidate ending later in time is used. |
| Z, Z' and µ are defined as follows. |
| $Z = {max}_{m = 0 , … , M - 1} \left(Z\left(m\right)\right) and Z ′ = {max}_{m = 0 , … , M - 1} \left(Z′\left(m\right)\right) ,$ |
| Here, M is the number of updated CSI reports, and (Z(m),Z'(m)) corresponds to the mth updated CSI report and is defined as follows. |
| *-* $\left({Z}_{1}, {Z}_{1}^{′}\right)$ in Table 7, when max{ µPDCCH, µCSI-RS, µUL} ≤ 3, CSI is triggered without a PUSCH including a transmission block or HARQ-ACK or both, L = 0 CPU is occupied and CSI to be transmitted is single CSI, and CSI corresponds to a broadband frequency granularity corresponding to up to 4 CSI-RS ports in a single resource without a CRI report, and CodebookType is configured as 'typeI-SinglePanel' or reportQuantity is configured as 'cri-RI-CQI', or |
| *-* $\left({Z}_{1}, {Z}_{1}^{′}\right)$ in Table 8, when CSI corresponds to broadband frequency granularity corresponding to up to 4 CSI-RS ports in a single resource without a CRI report and CodebookType is configured as 'typeI-SinglePanel' or reportQuantity is configured as 'cri-RI-CQI', or |
| *-* $\left({Z}_{1}, {Z}_{1}^{′}\right)$ in Table 8, when CSI corresponds to a broadband frequency granularity where reportQuantity is configured as 'ssb-Index-SINR', 'cri-SINR', 'ssb-Index-SINR-Index', or 'cri-SINR-Index', or |
| - $\left({Z}_{3}, {Z}_{3}^{′}\right)$ in Table 8, when reportQuantity is configured as 'cri-RSRP', 'ssb-Index-RSRP', 'cri-RSRP-Index' or 'ssb-Index-RSRP-Index', wherein Xµ follows a capability beamReportTiming reported by a UE and KB₁ follows a capability beamSwitchTiming reported by a UE, or when a CSI report is configured as LTM-CSI-ReportConfig for L1-RSRP measurement, or |
| - $\left({Z}_{2}, {Z}_{2}^{′}\right)$ or $\left({Z}_{2}+{Z}_{2}^{′},2{Z}_{2}^{′}\right)$ based on $\left({Z}_{2}, {Z}_{2}^{′}\right)$ in Table 8 according to a capability reported by a UE, when codebookType is 'typeII-CJT-r18' or 'typeII-CJT-PortSelection-r18' and corresponding NZP-CSI-RS-ResourceSet for channel measurement consist of 1<N_{TRP}≤4 resources, or |
| - $\left({Z}_{2}+14\left(K-1\right)m,{Z}_{2}^{′}\right)$ based on $\left({Z}_{2}, {Z}_{2}^{′}\right)$ in Table 8, when a CSI report is configured as N₄=1, codebookType is configured as 'typeII-Doppler-r18' or 'typeII-Doppler-PortSelection-r18' and corresponding NZP-CSI-RS-ResourceSet for channel measurements is K CSI-RS resources and aperiodic, or |
| - $\left({Z}_{2}+w,{Z}_{2}^{′}\right)$ based on $\left({Z}_{2}, {Z}_{2}^{′}\right)$ in Table 8, wherein w=56.(K_{P}-1) or 56.K_{P} symbol, a UE capability according to the reported content, wherein the value of *KP* ∈ {1,2,4} is indicated by a UE capability, a CSI report is configured as N₄=1, codebookType is configured as 'typeII-Doppler-r18' or 'typeII-Doppler-PortSelection-r18' and corresponding NZP-CSI-RS-ResourceSet for channel measurement is a single CSI-RS resource and periodic or semi-permanent, or |
| - $\left({Z}_{2}+14\left(K-1\right)m,{Z}_{2}^{′}\right)$ or $\left({Z}_{2}+14\left(K-1\right)m+{Z}_{2}^{′},2{Z}_{2}^{′}\right)$ based on $\left({Z}_{2}, {Z}_{2}^{′}\right)$ in Table 8 according to a capability reported by a UE, when a CSI report is configured as N₄>1, codebook Type is configured as 'typeII-Doppler-r18' and corresponding NZP-CSI-RS-ResourceSet for channel measurement is aperiodic with K CSI-RS resources, or |
| - $\left({Z}_{2}+w,{Z}_{2}^{′}\right)$ or $\left({Z}_{2}+w+{Z}_{2}^{′},2{Z}_{2}^{′}\right)$ based on $\left({Z}_{2}, {Z}_{2}^{′}\right)$ in Table 8 according to a capability reported by a UE, when a CSI report is configured as N₄>1, codebookType is configured as 'typeII-Doppler-r18' and corresponding NZP-CSI-RS-ResourceSet for channel measurement is periodic or semi-persistent with a single CSI-RS resource, or |
| - Otherwise, $\left({Z}_{2}, {Z}_{2}^{′}\right)$ in Table 8 |
| - µ in Table 7 and Table 8 corresponds to the minimum (µPDCCH, µCSI-RS, µUL). Here, µPDCCH corresponds to the subcarrier spacing of a PDCCH where DCI is transmitted, µUL corresponds to the subcarrier spacing of a PUSCH where a CSI report will be transmitted, and µCSI-RS corresponds to the minimum subcarrier spacing of an aperiodic CSI-RS |
| triggered by DCI. |
| For a CSI report corresponding to CSI-ReportConfig including a sub-configuration list provided by csi-ReportSubConfigToAddModList, only $\left({Z}_{2}, {Z}_{2}^{′}\right)$ in Table 8 is applied. |

**[Table 7]**

| µ | Z₁ (Symbol) | |
|---|---|---|
| | Z₁ | Z'₁ |
| 0 | 10 | 8 |
| 1 | 13 | 11 |
| 2 | 25 | 21 |
| 3 | 43 | 36 |

**[Table 8]**

| µ | Z₁ (Symbol) | | Z₂ (Symbol) | | Z₃ (Symbol) | |
|---|---|---|---|---|---|---|
| | Z₁ | Z'₁ | Z₂ | Z'₂ | Z₃ | Z'₃ |
| 0 | 22 | 16 | 40 | 37 | 22 | X₀ |
| 1 | 33 | 30 | 72 | 69 | 33 | X₁ |
| 2 | 44 | 42 | 141 | 140 | min(44, X₂+KB₁) | X₂ |
| 3 | 97 | 85 | 152 | 140 | min(97, X₃+KB₂) | X₃ |
| 5 | 388 | 340 | 608 | 560 | min(388, X₅+KB₃) | X₅ |
| 6 | 776 | 680 | 1216 | 1120 | min(776, X₆+KB₄) | X₆ |

A base station shall schedule the time domain resource of a UL channel so that it is greater than or equal to a Z value and a Z' value, and otherwise, a UE may not be guaranteed the sufficient time for CSI processing and may be unable to perform a CSI report.

In addition, a Z' value is used to determine a CSI reference resource (e.g., a slot) for an aperiodic CSI report, and may determine the last slot in which a UE may perform channel/interference measurement for corresponding CSI computation. Even when the last slot is determined in this way, if some symbols in the latter part of a corresponding slot are used for measurement, a UE's CSI processing time may be insufficient.

Considering this, when a periodic or semi-persistent CSI-RS is configured as the measurement resource of an aperiodic CSI report (e.g., a CMR and/or an IMR), there is a restriction that measurement shall be terminated before the transmission start timing of an aperiodic CSI report - Z' (symbol). In addition, considering this, when an aperiodic CSI-RS is configured as the measurement resource of an aperiodic CSI report (e.g., a CMR and/or an IMR), a UE may be unable to perform a CSI report if an aperiodic measurement resource is configured at or after the transmission start timing of an aperiodic CSI report - Z' (symbol).

For a UE-initiated beam report proposed in the present disclosure, a UL channel in which a corresponding report will be performed may be configured/indicated based on various methods, among which the following method may be considered.

For a UE-initiated beam report, a UE determines whether a pre-defined specific event is satisfied/met (e.g., by performing event monitoring) and based on this, may report whether an event is satisfied/met (through an SR or an RACH). Alternatively, when an event occurs, a UE may request a base station to perform scheduling for a beam report. Subsequently, a base station may schedule a UL channel for a corresponding beam quantity report through DCI triggering an aperiodic CSI report, and a UE may perform a report for the beam quantity through a corresponding UL channel. As an example, the beam quantity reported by a UE may include a CRI, an SSB index, L1-RSRP, and/or L1-SINR.

In other words, when a base station receives a report for event occurrence from a UE, a subsequent process may be similar to an existing aperiodic CSI report method. However, for a UE-initiated beam report, a UE may have already completed computation for the beam quantity during the process of performing event monitoring. It is different from an existing operation where a UE performs computation for the beam quantity after receiving DCI triggering an aperiodic CSI report.

For example, a UE-initiated beam report may be configured so that a UE monitors whether the L1-RSRP of a measurement resource (e.g., a CMR and/or an IMR) configured as a specific beam set is greater than or equal to a specific value and when it is greater than or equal to a specific value (e.g., a threshold), a UE computes and reports L1-RSRP from a measurement resource configured as a corresponding specific beam set. In this case, since a measurement resource for event monitoring and a measurement resource for computing the beam quantity are the same, computation for the beam quantity was already completed during an event monitoring process.

Accordingly, for a UE-initiated beam report, a UE may perform processing for a corresponding report in a shorter time than the CSI processing time of an existing aperiodic CSI report.

FIG. 9 illustrates a two-step-based UE-initiated beam report to which the embodiment of the present disclosure may be applied.

Referring to FIG. 9, a potential UL channel in which a UE performs a report may be divided into a channel in which a report for whether an event occurs is performed and a channel in which a report for the beam quantity is performed. In addition, for convenience of description, FIG. 9 assumes that one periodic CSI-RS is configured in a measurement resource. In addition, when a report for the beam quantity is configured to be aperiodic, DCI triggering a corresponding report may be transmitted by a base station to a UE after a report for whether an event occurs.

Hereafter, methods in which a UE configures/applies a value defining the minimum time required for processing a corresponding report (e.g., the aforementioned Z value and Z' value) in relation to the processing time for a UE-initiated beam report are described through specific examples.

### Embodiment 1

This embodiment relates to a method for configuring/applying the minimum time (e.g., the aforementioned Z value) between DCI triggering a report for the beam quantity and a corresponding report for a UE-initiated beam report.

For a UE-initiated beam report, a method may be applied in which a Z value is configured to be smaller than an existing value (e.g., a pre-defined Z value described in Tables 6 to 8). Here, an existing value may refer to a Z value configured for a CSI/beam report initiated by a network.

For a UE-initiated beam report, after completing decoding for DCI, a UE may immediately report/transmit a value/information for the pre-computed (or pre-encoded) beam quantity to a base station through a UL channel scheduled by corresponding DCI. Accordingly, in this case, a Z value may be configured short by considering only the time required for DCI decoding (e.g., a DCI decoding time), or a UE may not be subject to the application of a Z value.

For example, a new Z value for a UE-initiated beam report may be configured as shown in Equation 3 by using an existing Z value. [Equation 3] $\begin{matrix}New Z Value = Existing Z Value - \left(Existing Z {Value * r}_{1}\right) , or \\ New Z Value = Existing z Value * {r}_{1}\end{matrix}$

In Equation 3, an r₁ value relates to a ratio for setting/configuring a new z value, which may be a value less than 1. A UE may select one of the specific candidate values and report it to a base station as an r₁ value, or may directly report a specific value to a base station as an r₁ value. Alternatively, an r₁ value may be configured/provided by a base station to a UE.

For example, referring to Table 8, a method for determining the Z value (e.g., Z₃ value) of a beam report may be different according to subcarrier spacing, and when subcarrier spacing is 15kHz or 30kHz, a Z value is fixed to a specific value, but when subcarrier spacing is greater than or equal to 60kHz, a Z value may be determined as min(Z₁, X+KB). Based on this, when applying the proposed method of this embodiment, a new Z value (e.g., a new Z₃ value) is determined as min(new Z₁, X+KB), wherein new Z₁ may be determined/computed by applying Equation 3 based on an existing Z₁ value. Alternatively, for a UE-initiated beam report, it may be determined according to the formula of Z₃ = Z₁ instead of an existing formula (e.g., min(Z₁, X+KB)).

In addition, for a UE-initiated beam report, according to the implementation of a UE, whether to use an existing Z value or a new Z value may be different. Accordingly, in this regard, a UE may report information for a Z value to be used by itself (e.g., an existing Z value or a new Z value) to a base station as the capability information of a UE. In addition, a UE may also report information for an r₁ value for a new Z value to a base station as capability information.

### Embodiment 2

This embodiment relates to a method for configuring/applying the minimum time (e.g., the aforementioned Z' value) between the latest measurement for a report for the beam quantity (e.g., channel/interference measurement) and a corresponding report for a UE-initiated beam report.

### (Embodiment 2-1)

As described above, when computation for the quantity to be reported was already completed in an event monitoring step, a UE does not need to use an aperiodic measurement resource (e.g., a CMR and/or an IMR) configured for an aperiodic report (e.g., an aperiodic beam/CSI report) triggered by a base station. Accordingly, a base station may not configure an aperiodic measurement resource for a corresponding aperiodic report, or even when configured, may not actually transmit a corresponding measurement resource. Additionally or alternatively, even when an aperiodic measurement resource is configured for a corresponding aperiodic report, a UE may ignore and not use a corresponding aperiodic measurement resource.

### (Embodiment 2-2)

For the aforementioned Embodiment 2-1, when the transmission timing of a UL channel for a report for the beam quantity is delayed (e.g., when a computation timing for the beam quantity during event monitoring and the transmission timing of a UL channel for a report for a corresponding beam quantity exceed a certain standard), the report quantity computed during event monitoring may be useless (e.g., an outdated report quantity). In this case, it may be necessary to recompute the report quantity by using an aperiodic measurement resource (e.g., a CMR and/or an IMR) configured for a corresponding aperiodic report (e.g., an aperiodic beam/CSI report).

In this regard, a method for configuring a Z' value to be smaller than an existing value (e.g., a pre-defined Z' value described in Tables 6 to 8) may be applied. Here, an existing value may refer to a Z' value configured for a CSI/beam report initiated by a network. Alternatively, when computation for the report quantity was already completed in an event monitoring step, a UE does not need to use an aperiodic measurement resource configured for an aperiodic report triggered by a base station, and in this case, a UE may not be subject to the application of a Z' value.

For example, a new Z' value for a UE-initiated beam report may be configured as shown in Equation 4 by using an existing Z' value. [Equation 4] $\begin{matrix}New Z ′ Value = Existing Z ′ Value - \left(Existing Z′ {Value * r}_{2}\right) , or \\ New Z ′ Value = Existing Z ′ Value * {r}_{2}\end{matrix}$

In Equation 4, an r₂ value relates to a ratio for setting/configuring a new z' value, which may be a value less than 1. A UE may select one of the specific candidate values and report it to a base station as an r₂ value, or may directly report a specific value to a base station as an r₂ value. Alternatively, an r₂ value may be configured/provided by a base station to a UE.

In this regard, an r₁ value in Equation 3 and an r₂ value in Equation 4 are a distinct value, and may be configured/reported individually. As an example, an r₁ value and an r₂ value may correspond to a different or same value.

In addition, for a UE-initiated beam report, according to the implementation of a UE, whether to use an existing Z' value or a new Z' value may be different. Accordingly, in this regard, a UE may report information for a Z' value to be used by itself (e.g., an existing Z' value or a new Z' value) to a base station as the capability information of a UE. In addition, a UE may also report information for an r₂ value for a new Z' value to a base station as capability information.

In addition, regarding the proposed methods of this embodiment, the method of Embodiment 2-2 may be applied when a UE does not perform computation for the beam quantity by using an aperiodic measurement resource (e.g., a CMR and/or an IMR). In addition, the method of Embodiment 2-1 may be applied when a UE does not use an aperiodic measurement resource (e.g., a CMR and/or an IMR) or when a corresponding aperiodic measurement resource is not configured by a base station.

### Embodiment 3

This embodiment relates to an operation method for a case in which an event occurrence situation is changed after a report for whether an event occurs, in relation to a UE-initiated beam report.

Specifically, in an event monitoring step, a UE already completed computation for the beam quantity and reported that an event occurred, but it may be changed later to a situation where an event does not occur when re-computation for the beam quantity is performed for a report for the beam quantity. In this case, a UE may report to a base station information representing that event occurrence was cancelled different from a timing for reporting whether an event occurs. When event occurrence is cancelled, a report for the beam quantity related thereto may be omitted.

For example, for the report of corresponding information, an event cancellation indicator (e.g., a 1-bit) may be added as a type of report quantity (e.g., UCI/CSI/beam quantity). Alternatively, a UE may report corresponding information through a pre-determined bit sequence (e.g., a bit sequence in which all bits are set as 0).

In addition, regarding a UE-initiated beam report, a UE-initiated beam report for a multi-component carrier (CC) may be configured, and a UE may report a CC list where an event occurred to a base station. In this case, a CC list may be constructed based on a bitmap form. As an example, when a UE-initiated beam report is configured for three CCs, the report of event occurrence may be performed based on a 3-bit bitmap. In this regard, when a UE reports to a base station a CC list where all are set as a value of 0 (e.g., no event occurrence for all CCs), a base station may determine based on this that a corresponding event was cancelled.

In addition, regarding the proposed method of the present disclosure, for a 2-step-based UE-initiated beam report, a measurement resource (e.g., a CMR and/or an IMR) for validating/detecting whether an event occurs (e.g., event monitoring) and a measurement resource (e.g., a CMR and/or an IMR) for computing the beam quantity may be different. Here, validation/detection for whether an event occurs corresponds to the 1^{st} step of a 2-step-based UE-initiated beam report, and beam quantity computation corresponds to the 2^{nd} step.

For example, event(s) related to a UE-initiated beam report may be defined as follows.
- Event 1: The quality of a current beam is worse/lower than a specific threshold.
- Event 2: The quality of at least one new beam such as L1-RSRP becomes a better/higher threshold than a current beam.
- Event 3: The quality of a new beam is better/higher than a specific threshold.
- Event 4: The quality of a current beam is worse/lower than threshold 1, and the quality of at least one new beam is better/higher than threshold 2.
- Event 7: The quality of at least one new beam such as L1-RSRP becomes a better/higher threshold than an RS derived from an activated TCI state having the Qth best quality.

Regarding the aforementioned event(s), a current beam refers to a currently used beam, which may correspond to a QCL source RS configured in a TCI state indicated by a base station to a UE or an SSB that has a QCL relationship with a corresponding QCL source RS. In addition, a new beam may be separately configured by a base station to a UE for an event check (e.g., detection/monitoring for whether an event occurs).

For example, for Event 1, a CMR for event monitoring is configured as a current beam, but a CMR for beam quantity computation may be configured as a beam set that includes or does not include a current beam (e.g., a CSI-RS for beam management, or an SSB). In this case, beam quantity computation is not performed in an event monitoring step, and beam quantity computation for a beam report may be performed only when an event occurs. Accordingly, in this case, a UE may be configured/defined to use an existing Z value and Z' value for an existing aperiodic CSI report, and may be configured/defined to use the aforementioned Embodiment 1 and/or Embodiment 2 when a CMR for a 2-step report is the same.

In addition, regarding the proposed methods of the present disclosure, a measurement resource (e.g., a CMR and/or an IMR) may be directly configured for a UE-initiated beam report, but a current beam, etc. may also be used as a measurement resource for event monitoring/validation and a beam report. As an example, a base station may directly configure a measurement resource (e.g., a CMR and/or an IMR) for a CSI report configuration information element (CSI report config IE) for a UE-initiated beam report.

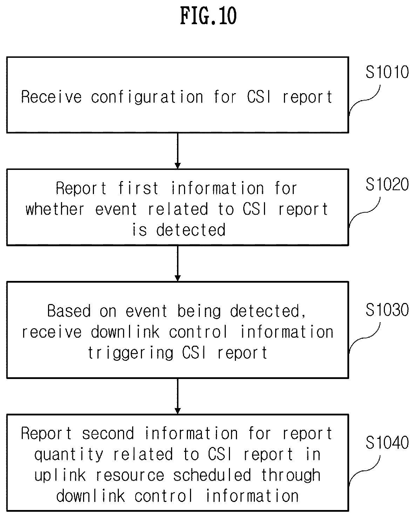

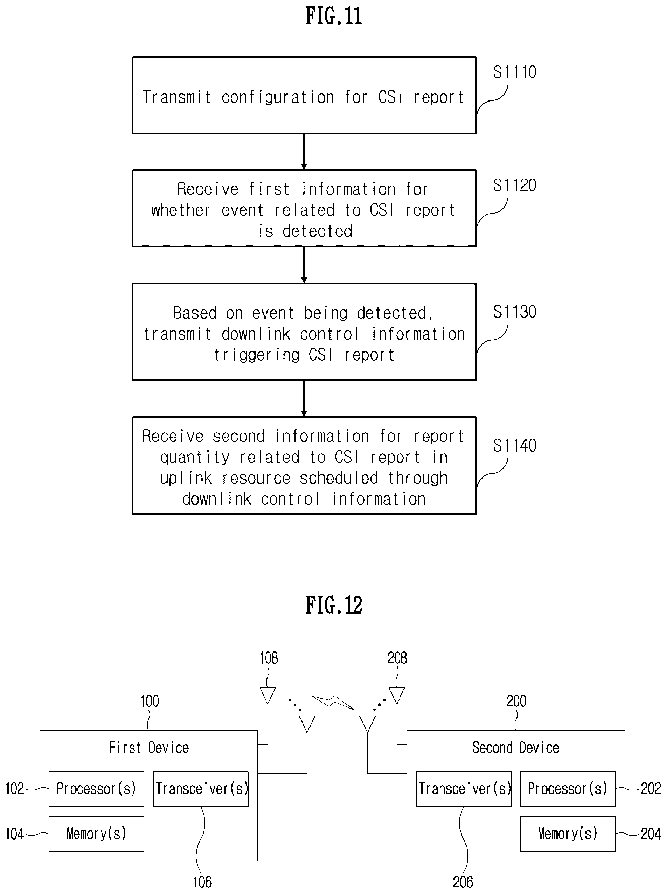

FIGS. 10 and 11 illustrate a UE operation and a base station operation for a UE-initiated beam report according to the embodiments of the present disclosure described above.

FIG. 10 is a diagram for describing the operation of a UE according to an embodiment of the present disclosure.

Referring to FIG. 10, a UE may receive a configuration for a CSI report from a base station (S1010).

For example, a corresponding configuration for a CSI report may include configuration information for a UE-initiated beam report described above in the present disclosure.

A UE may report to a base station the first information for whether an event related to a corresponding CSI report is detected (S1020).

For example, the report of the corresponding first information may correspond to the 1^{st} step in a 2-step-based UE-initiated beam report described above in the present disclosure.

When an event is detected, a UE may receive downlink control information (DCI) triggering a corresponding CSI report from a base station (S1030).

In this case, corresponding downlink control information may include information for scheduling a UL channel/resource for performing a corresponding CSI report.

A UE may report to a base station the second information for the report quantity related to a corresponding CSI report from a UL resource scheduled through downlink control information (S1040).

For example, the report of the corresponding second information may correspond to the 2^{nd} step in a 2-step-based UE-initiated beam report described above in the present disclosure.

A corresponding report quantity may correspond to a power measurement value for a reference signal configured as a measurement resource based on a configuration for a CSI report. In other words, a corresponding report quantity may correspond to a received power measurement value (e.g., L1-RSRP, L1-SINR, etc.) based on a beam/spatial filter (e.g., a CSI-RS resource indicator (CRI), an SSB index (or an SSB resource indicator)) for the measurement resource. For example, in measurement based on the present disclosure, a spatial filter may be related to at least one of the index/ID/indicator of a CSI-RS resource (based on a QCL relationship) or an SSB index (or the index/ID/indicator of an SSB resource).

In this regard, at least one value related to the processing time of a corresponding CSI report (e.g., a Z value and a Z' value for a UE-initiated beam report) may be set/configured/defined based on whether computation for the report quantity is completed upon event detection in step S1020.

Here, the at least one value may correspond to value(s) related to the minimum time for a UE's processing for a UE-initiated beam report.

For example, according to the present disclosure, at least one value related to the processing time of a corresponding CSI report may include the first value (e.g., a new Z value) related to the time between the timing of receiving downlink control information in step S1030 and the timing of reporting the second information in step S1040 (e.g., see Embodiment 1). In this case, when computation for the report quantity is completed upon event detection, the first value may be set as a value smaller than the first specific value (e.g., an existing Z value based on Tables 6 to 8) that is pre-defined for another CSI report type (e.g., a CSI/beam report type initiated by a base station).

Regarding a corresponding example, a UE may report to a base station information for at least one of whether the first value is applied, whether a pre-defined first specific value is applied and a ratio related to the setting of the first value (e.g., an r₁ value in Equation 3) as UE's capability information. In addition, when a measurement resource for reporting the first information and a measurement resource for reporting the second information are different, the processing of a corresponding CSI report may be based on a pre-defined first specific value. In addition, when a measurement resource for reporting the first information and a measurement resource for reporting the second information are the same, the processing of a corresponding CSI report may be based on the first value.

As another example, according to the present disclosure, at least one value related to the processing time of a corresponding CSI report may include the second value (e.g., a new Z' value) related to the time between the last timing of measurement for reporting the second information in step S1040 and the timing of reporting the corresponding second information (e.g., see Embodiment 2-2). In this case, when computation for the report quantity is completed upon event detection but an interval between the timing of computing the report quantity and the timing of reporting the second information exceeds a certain standard, the second value may be set as a value smaller than the second specific value (e.g., an existing Z' value based on Tables 6 to 8) that is pre-defined for another CSI report type (e.g., a CSI/beam report type initiated by a base station). In this case, a corresponding second value may be for re-computing the report quantity.

Regarding a corresponding example, a UE may report to a base station information for at least one of whether the second value is applied, whether a pre-defined second specific value is applied and a ratio related to the setting of the second value (e.g., an r₂ value in Equation 4) as UE's capability information. In addition, when a measurement resource for reporting the first information and a measurement resource for reporting the second information are different, the processing of a corresponding CSI report may be based on a pre-defined second specific value. In addition, when a measurement resource for reporting the first information and a measurement resource for reporting the second information are the same, the processing of a corresponding CSI report may be based on the second value.

As another example, according to the present disclosure, when computation for the report quantity is completed upon event detection, a measurement resource for reporting the second information in step S1040 is ignored by a UE, and may not be used (e.g., see Embodiment 2-1). In other words, when computation for the report quantity is completed upon event detection, a UE may not re-compute the report quantity for the report of the second information.

In addition, according to the present disclosure, when an event detection condition is not satisfied when (re)computing the report quantity after a UE reports to a base station that an event is detected, a corresponding UE may transmit to a base station information representing that the detection of an event is cancelled (e.g., see Embodiment 3). For example, when a CSI report is configured for a multi-carrier component(CC), the first information in step S1020 may consist of bitmaps in which whether an event is detected for each CC is mapped to each bit. In this case, information representing that the detection of an event is cancelled may correspond to information in which all bits of a corresponding bitmap are set as a value (e.g., 0 (zero)) representing that an event detection condition is not satisfied. In this regard, when an event detection condition is not satisfied when (re)computing the report quantity after a UE reports that an event is detected, a UE may omit the report of the second information (e.g., a report for the beam quantity).

A method described in the example of FIG. 10 may be performed by the first device 100 in FIG. 12. In other words, a UE in FIG. 10 may be implemented as the first device 100. For example, one or more processors 102 of the first device 100 of FIG. 12 may be configured to receive a configuration for a CSI report through one or more transceivers 106, report the first information for whether an event related to a corresponding CSI report is detected, receive downlink control information triggering a corresponding CSI report when an event is detected and report the second information for the report quantity related to a corresponding CSI report in a UL resource scheduled by downlink control information.

Furthermore, one or more memories 104 of the first device 100 may store instructions for performing a method described in the example of FIG. 10 or examples described above when executed by one or more processors 102.

FIG. 11 is a diagram for describing the operation of a base station according to an embodiment of the present disclosure.

Referring to FIG. 11, a base station may transmit a configuration for a CSI report to a UE (S1110).

For example, a corresponding configuration for a CSI report may include configuration information for a UE-initiated beam report described above in the present disclosure.

A base station may receive from a UE the first information for whether an event related to a corresponding CSI report is detected (S1120).

For example, the report of the corresponding first information may correspond to the 1^{st} step in a 2-step-based UE-initiated beam report described above in the present disclosure.

When an event is detected, a base station may transmit downlink control information (DCI) triggering a corresponding CSI report to a UE (S1130).

In this case, corresponding downlink control information may include information for scheduling a UL channel/resource for performing a corresponding CSI report.

A base station may receive from a UE the second information for the report quantity related to a corresponding CSI report from a UL resource scheduled through downlink control information (S1040).

For example, the report of the corresponding second information may correspond to the 2^{nd} step in a 2-step-based UE-initiated beam report described above in the present disclosure.

A corresponding report quantity may correspond to a power measurement value for a reference signal configured as a measurement resource based on a configuration for a CSI report. In other words, a corresponding report quantity may correspond to a received power measurement value (e.g., L1-RSRP, L1-SINR, etc.) based on a beam/spatial filter (e.g., a CSI-RS resource indicator (CRI), an SSB index (or an SSB resource indicator)) for the measurement resource. For example, in measurement based on the present disclosure, a spatial filter may be related to at least one of the index/ID/indicator of a CSI-RS resource (based on a QCL relationship) or an SSB index (or the index/ID/indicator of an SSB resource).

In this regard, at least one value related to the processing time of a corresponding CSI report (e.g., a Z value and a Z' value for a UE-initiated beam report) may be set/configured/defined based on whether computation for the report quantity is completed upon event detection in step S1020. Here, the at least one value may correspond to value(s) related to the minimum time for a UE's processing for a UE-initiated beam report.

Since specific features for the first value related to the time between the timing of receiving downlink control information and the timing of reporting the second information, the second value related to the time between the last timing of measurement for reporting the second information and the timing of reporting the second information, a CSI report type, a UE's capability information report, the application of a value according to whether there is identity between measurement resources, an operation related to the cancellation of event detection, etc. are the same as described by referring to FIG. 10, an overlapping description is omitted.

A method described in the example of FIG. 11 may be performed by the second device 200 in FIG. 12. In other words, a base station in FIG. 11 may be implemented as the second device 200. For example, one or more processors 202 of the second device 200 of FIG. 12 may be configured to transmit a configuration for a CSI report through one or more transceivers 206, receive the first information for whether an event related to a corresponding CSI report is detected, transmit downlink control information triggering a corresponding CSI report when an event is detected and receive the second information for the report quantity related to a corresponding CSI report in a UL resource scheduled by downlink control information.

Furthermore, one or more memories 204 of the second device 200 may store instructions for performing a method described in the example of FIG. 11 or examples described above when executed by one or more processors 202.

Although the proposed methods of the present disclosure are described by using a beam report as a representative example, they may be extended and applied to a CSI report (e.g., CRI, RI, PMI, CQI report, etc.). In other words, methods proposed in the present disclosure may be utilized even when a UE-initiated CSI report other than a UE-initiated beam report is supported. In addition, in a new wireless communication technology (e.g., 6G, etc.), methods proposed in the present disclosure may also be utilized when computing/reporting a CSI, a beam, and/or other UCI.

In addition, in the proposed methods of the present disclosure, a Z value and a Z' value are expressed without a separate sub index, but for a beam report, based on [Z, Z'] being expressed as [Z₃, Z'₃], a Z value and a Z' value for a UE-initiated beam report may refer to a Z₃ value and a Z'₃ value. Similarly, when the proposed methods of the present disclosure are applied to a general CSI report, a Z value and a Z' value described above in the proposed methods of the present disclosure may refer to a Z₁ value and a Z'₁ value.

In addition, in the proposed methods of the present disclosure, it is described that a new Z value and a new Z' value are smaller than an existing Z value and an existing Z' value, but conversely, a new Z value and a new Z' value may be configured/applied as a value greater than an existing Z value and an existing Z' value. This is because since a UE shall perform not only a computation operation for the beam quantity but also event monitoring for a UE-initiated beam report, it may be necessary to increase a Z value and a Z' value to a value greater than an existing Z value and an existing Z' value. To this end, in Equation 3 and Equation 4, an r value (e.g., an r₁ value, an r₂ value) may be configured as a value greater than 1, and a new Z value and a new Z' value may become greater than an existing Z value and an existing Z' value by applying an addition (+) operation instead of a subtraction (-) operation.

In addition, in the proposed methods of the present disclosure, when a UE requests a base station to schedule a UL channel for a specific CSI report or beam report when an event for a corresponding CSI report or beam report occurs, it may be interpreted as a UE informing a base station that an event occurred. In this case, whether the scheduling of a UL channel is actually performed may be determined by a base station.

In addition, in the proposed methods of the present disclosure, an ID may be interpreted as having the same meaning as an index, and a CMR and/or an IMR may refer to a CMR and/or an IMR configured for a UE-initiated beam report.

In addition, in the proposed methods of the present disclosure, '/' may be interpreted as 'and', 'or', or 'and/or' depending on the context.

In addition, 'beam' described in the proposed methods of the present disclosure may refer to a source RS for a spatial filter or a spatial relation, and may be interpreted as a QCL (type-D) RS, a (DL/UL/joint) TCI state, or a spatial relation RS (for a UL).

### General Device to which the Present Disclosure may be applied

FIG. 12 illustrates a block diagram of a wireless communication device according to an embodiment of the present disclosure.

In reference to FIG. 12, a first device 100 and a second device 200 may transmit and receive a wireless signal through a variety of radio access technologies (e.g., LTE, LTE-A, LTE-A pro, NR, 5G, 5G-A, 6G).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [INDUSTRIAL APPLICABILITY]

A method proposed by the present disclosure is mainly described based on an example applied to 3GPP LTE/LTE-A, 5G, 6G system, but may be applied to various wireless communication systems other than the 3GPP LTE/LTE-A, 5G, 6G system.

## Claims

1. A method comprising:
receiving, by a user equipment (UE), a configuration for channel state information (CSI) report;
reporting, by the UE, first information for whether an event related to the CSI report is detected;
based on the event being detected, receiving, by the UE, downlink control information triggering the CSI report; and
reporting, by the UE, second information for a report quantity related to the CSI report in an uplink resource scheduled through the downlink control information,
wherein the report quantity is related to a power measurement value for a reference signal configured as a measurement resource based on the configuration, and
wherein at least one value related to a processing time of the CSI report is set based on whether computation for the report quantity is completed upon detection of the event.

2. The method of claim 1, wherein:
the at least one value includes a first value related to a time between a timing of receiving the downlink control information and a timing of reporting the second information, and
based on the computation for the report quantity being completed upon the detection of the event, the first value is set as a value smaller than a first specific value pre-defined for another CSI report type.

3. The method of claim 2, wherein:
the another CSI report type corresponds to a CSI report type initiated by a base station.

4. The method of claim 2, wherein:
the method further includes reporting information for at least one of whether the first value is applied, whether the pre-defined first specific value is applied, and a ratio related to a setting of the first value as capability information of the UE.

5. The method of claim 2, wherein:
based on a measurement resource for reporting the first information and a measurement resource for reporting the second information being different, processing of the CSI report is based on the pre-defined first specific value, and
based on the measurement resource for reporting the first information and the measurement resource for reporting the second information being equal, the processing of the CSI report is based on the first value.

6. The method of claim 1, wherein:
based on the computation for the report quantity being completed upon the detection of the event, a measurement resource for reporting the second information is ignored by the UE.

7. The method of claim 1, wherein:
the at least one value includes a second value related to a time between a last timing of measurement for reporting the second information and a timing of reporting the second information, and
based on the computation for the report quantity being completed upon the detection of the event, and an interval between a timing of the computation for the report quantity and the timing of reporting the second information being greater than a certain standard, the second value is set as a value smaller than a second specific value pre-defined for another CSI report type.

8. The method of claim 7, wherein:
the another CSI report type corresponds to a CSI report type initiated by a base station.

9. The method of claim 7, wherein:
the method further includes reporting information for at least one of whether the second value is applied, whether the pre-defined second specific value is applied, and a ratio related to a setting of the second value as capability information of the UE.

10. The method of claim 7, wherein:
based on a measurement resource for reporting the first information and a measurement resource for reporting the second information being different, processing of the CSI report is based on the pre-defined second specific value, and
based on the measurement resource for reporting the first information and the measurement resource for reporting the second information being equal, the processing of the CSI report is based on the second value.

11. The method of claim 1, wherein:
based on an event detection condition not being satisfied upon the computation for the report quantity after reporting that the event is detected, the method includes transmitting information representing that the detection of the event is cancelled.

12. The method of claim 11, wherein:
based on the CSI report being configured for a multi-carrier component(CC), the first information is composed of a bitmap in which whether an event is detected for each CC is mapped to each bit, and
the information representing that the detection of the event is cancelled corresponds to information in which all bits of the bitmap are set as a value representing that the event detection condition is not satisfied.

13. The method of claim 11, wherein:
based on the event detection condition not being satisfied upon the computation for the report quantity after reporting that the event is detected, a report of the second information is omitted.

14. The method of claim 1, wherein:
based on a CSI-RS being configured as a measurement resource for the CSI report, a spatial filter for the measurement resource is related to an index of a CSI-RS resource, and
based on an SSB being configured as the measurement resource for the CSI report, the spatial filter for the measurement resource is related to an index of an SSB resource.

15. An apparatus comprising:
one or more transceivers; and
one or more processors connected to the one or more transceivers,
wherein the one or more processors are configured to:
receive, through the one or more transceivers, a configuration for channel state information (CSI) report;
report, through the one or more transceivers, first information for whether an event related to the CSI report is detected;
based on the event being detected, receive, through the one or more transceivers, downlink control information triggering the CSI report; and
report, through the one or more transceivers, second information for a report quantity related to the CSI report in an uplink resource scheduled through the downlink control information,
wherein the report quantity is related to a power measurement value for a reference signal configured as a measurement resource based on the configuration, and
wherein at least one value related to a processing time of the CSI report is set based on whether computation for the report quantity is completed upon detection of the event.

16. A method comprising:
transmitting, by a base station, a configuration for a channel state information (CSI) report;
receiving, by the base station, first information for whether an event related to the CSI report is detected;
based on the event being detected, transmitting, by the base station, downlink control information triggering the CSI report; and
receiving, by the base station, second information for a report quantity related to the CSI report in an uplink resource scheduled through the downlink control information,
wherein the report quantity is related to a power measurement value for a reference signal configured as a measurement resource based on the configuration, and
wherein at least one value related to a processing time of the CSI report is set based on whether computation for the report quantity is completed upon detection of the event.

17. A method comprising:
one or more transceivers; and
one or more processors connected to the one or more transceivers,
wherein the one or more processors are configured to:
transmit, through the one or more transceivers, a configuration for a channel state information (CSI) report;
receive, through the one or more transceivers, first information for whether an event related to the CSI report is detected;
based on the event being detected, transmit, through the one or more transceivers, downlink control information triggering the CSI report; and
receive, through the one or more transceivers, second information for a report quantity related to the CSI report in an uplink resource scheduled through the downlink control information,
wherein the report quantity is related to a power measurement value for a reference signal configured as a measurement resource based on the configuration, and
wherein at least one value related to a processing time of the CSI report is set based on whether computation for the report quantity is completed upon detection of the event.

18. A processing apparatus comprising:
one or more processors; and
one or more computer memories operably connected to the one or more processors and storing instructions that, when executed by the one or more processors, cause the processing apparatus to perform the method according to any one of claims 1 to 14.

19. One or more non-transitory computer-readable media storing one or more instructions that, when executed by one or more processors, cause the one or more processors to perform the method according to any one of claims 1 to 14.
